# EUROPEAN PATENT SPECIFICATION

(11) **EP 3 791 714 B1**
(45) Date of publication and mention of the grant of the patent: **17.06.2026**
(21) Application number: 19800487.1
(22) Date of filing: 07.05.2019
(51) Int. Cl.: A01N 47/36, A01G 17/00, A01P 15/00, A01P 21/00

(54) **METHOD FOR CULTIVATING PLANTS AND COLORING ACCELERATOR FOR GRAPE BERRIES**
VERFAHREN ZUM KULTIVIEREN VON PFLANZEN UND FARBBESCHLEUNIGER FÜR TRAUBENBEEREN
PROCÉDÉ PERMETTANT DE CULTIVER DES PLANTES ET ACCÉLÉRATEUR DE COLORATION POUR DES BAIES DE RAISIN

(30) Priority: 11.05.2018 US 201815977890; 12.07.2018 US 201816034010
(43) Date of publication of application: 17.03.2021
(73) Proprietor: Kaneka Corporation, Osaka-shi, Osaka 530-8288 (JP)
(72) Inventor: SAKAMOTO, Atsushi, Higashihiroshima-shi, Hiroshima 739-8526 (JP); SHIMADA, Hiroshi, Higashihiroshima-shi, Hiroshima 739-8526 (JP); TANAKA, Shoma, Higashihiroshima-shi, Hiroshima 739-8526 (JP); NOJIRI, Masutoshi, Takasago-shi, Hyogo 676-8688 (JP); FU, Yu, Takasago-shi, Hyogo 676-8688 (JP); KIZAKI, Noriyuki, Takasago-shi, Hyogo 676-8688 (JP); KITANO, Mitsuaki, Takasago-shi, Hyogo 676-8688 (JP)
(74) Representative: Hoffmann Eitle
(86) International application number: PCT/JP2019/018220
(87) International publication number: WO 2019/216302

(56) References cited:
- WO-A1-2017/130630
- WO-A1-2018/047940
- JP-A- 2017 169 519
- US-A1- 2018 310 565
- PEPPI M. C ET AL: "Application of abscisic acid rapidly upregulated UFGT gene expression and improved color of grape berries", VITIS., vol. 47, no. 1, 1 January 2008 (2008-01-01), DE, pages 11 - 14, XP055874086, ISSN: 0042-7500, DOI: https://doi.org/10.5073/vitis.2008.47.11-14
- HIROSHI TAKAGI ET AL: "Allantoin, a stress-related purine metabolite, can activate jasmonate signaling in a MYC2-regulated and abscisic acid-dependent manner", JOURNAL OF EXPERIMENTAL BOTANY, vol. 67, no. 8, 1 March 2016 (2016-03-01), GB, pages 2519 - 2532, XP055531811, ISSN: 0022-0957, DOI: 10.1093/jxb/erw071
- SHUNSUKE WATANABE ET AL: "The purine metabolite allantoin enhances abiotic stress tolerance through synergistic activation of abscisic acid metabolism : Purine catabolism in ABA-mediated stress tolerance", PLANT CELL AND ENVIRONMENT, vol. 37, no. 4, 8 November 2013 (2013-11-08), GB, pages 1022 - 1036, XP055531804, ISSN: 0140-7791, DOI: 10.1111/pce.12218
- DELUC LAURENT G ET AL: "Transcriptomic and metabolite analyses of Cabernet Sauvignon grape berry development", vol. 8, no. 1, 1 December 2007 (2007-12-01), XP055874168, Retrieved from the Internet <URL:https://www.ncbi.nlm.nih.gov/pmc/articles/PMC2220006/pdf/1471-2164-8-429.pdf> DOI: 10.1186/1471-2164-8-429

## Description

### TECHNICAL FIELD

The present disclosure relates to a method for cultivating a plant involving applying allantoin to a grapevine, and to the use of allatoin as a coloring improving agent for fruits of a grapevine.

### BACKGROUND

Allantoin (5-ureidohydantoin) is an intermediate product generated during the process of degradation of nucleic acid bases (purine bases). In plant bodies, allantoin is generated from 5-hydroxyisouric acid with the aid of allantoin synthase (AS) and then degraded into allantoic acid with the aid of allantoinase (ALN).

Watanabe, S. et al., Plant Cell Environ., 37: 1022-1036, 2014 reports that an aln-1 mutant of *Arabidopsis thaliana,* in which the ALN gene was deleted, accumulated allantoin in the plant body and had higher dehydration/dry stress resistance than that of a wild-type plant. It also discloses that production of abscisic acid was promoted when allantoin was administered to wild-type *Arabidopsis thaliana.* However, the relationship between abscisic acid and the plant growth has not been elucidated.

It has been reported that increasing global temperatures may change vine phenology of winegrapes (Webb, L. B. et al. (2007) Journal of Grape and Wine Research. 13: 165-175), which may result in poorly colored grapes. Regarding the grape coloration, it has been reported that foliar spray treatments of phenylalanine or proline increased anthocyanin in grapes (El-Sayed, M.E.A., Journal of Horticultural Science & Ornamental Plants, 2013, 5(3):218-226). WO 2017/026313 has also reported that an anthocyanin content in grapes may be increased by applying both of abscisic acid and an amino acid such as leucine, isoleucine, and phenylalanine.

Peppi et al. (2008) VITIS, 47 (1): 11-14, investigates the effect of abscisic acid (ABA) on the color of 'Crimson Seedless' grapes.

Deluc et al. (2007) BMC Genomics, 8:429 describes the mRNA expression profiling on berries of *V. vinifera* Cabernet Sauvignon spanning seven stages of berry development from small pea size berries, through véraison, to mature berries.

Takagi et al. (2016) Journal of Experimental Botany, 67 (8): 2519-2532 investigates the expression of ABA-related genes using Arabidopsis knockout mutants (*aln*) of allantoinase and the expression of genes involved in jasmonic acid (JA) responses.

US 2018/0310565 A1 relates to a method for cultivating a plant including applying allantoin to a grapevine; and growing the grapevine in a cultivation medium.

### Citation List

### Patent Literature

Patent Literature 1: WO 2017/026313
Patent Literature 2: US 2018/0310565 A1

### Non Patent Literature

Non Patent Literature 1: Watanabe, S. et al., Plant Cell Environ., 37: 1022-1036, 2014
Non Patent Literature 2: Webb, L. B. et al. (2007) Journal of Grape and Wine Research. 13: 165-175
Non Patent Literature 3: El-Sayed, M.E.A., Journal of Horticultural Science & Ornamental Plants, 2013, 5(3):218-226
Non Patent Literature 4: Peppi et al., VITIS, 2008, 47 (1): 11-14
Non Patent Literature 5: Deluc et al., BMC Genomics, 2007, 8:429
Non Patent Literature 6: Takagi et al., Journal of Experimental Botany, 2016, 67 (8): 2519-2532

### SUMMARY

### Technical Problem

One or more embodiments of the present invention provides a method for cultivating a plant, and the use of an agent for promoting coloring of grapes.

### Solution to Problem

One or more embodiments of the present invention include a method for cultivating a plant, comprising applying allantoin to a grapevine; and growing the grapevine in a cultivation medium. Thus, one or more embodiments of the present invention include the following:
(1) A method for cultivating a plant, comprising:
   applying allantoin to a grapevine;
   growing the grapevine in a cultivation medium; and
   comprising exposing the grapevine to a temperature of about 30 °C or more for at least 60 minutes.
(2) The method according to (1), wherein applying the allantoin is performed at a veraison stage of the grapevine.
(3) The method according to claim 1 or 2, wherein the allantoin is applied to a part of the grapevine that is above the cultivation medium at a dose of about 0.05 to 5 g per grapevine.
(4) The method according to any one of (1) to (3), wherein the allantoin is applied by spraying the allantoin on leaves or fruits of the grapevine at a dose of about 0.05 to 5 g per grapevine.
(5) The method according to any one of (1) to (4), wherein the grapevine is grown at a density of about 1,500 to 10,000 plants per hectare, and wherein about 0.1 to 13 g/m² of the allantoin is applied.
(6) The method according to any one of (1) to (5), wherein an amino acid is not applied to the grapevine at a dose of 0.005 g/m² or more.
(7) The method according to any one of (1) to (7), wherein abscisic acid is not applied to the grapevine at a dose of 0.005 mg/m² or more.
(8) The method according to any one of (1) to (7), further comprising exposing the grapevine to a temperature of about 45 °C or more for at least 90 minutes.
(9) Use of allantoin as a coloring improving agent for fruits of a grapevine, comprising allantoin, wherein the coloring improving agent is applied to a grapevine cultivated in an environment in which the grapevine is exposed to a temperature of 30 °C or more for at least 60 minutes.
(10) The use according to (9), wherein the coloring improving agent is applied to a grapevine to which an amino acid is not applied at a dose of 0.005 g/m² or more.
(11) The use according to any one of (9) or (10), wherein the coloring improving agent is applied to a grapevine to which abscisic acid is not applied at a dose of 0.005 mg/m² or more.

### Advantageous Effects of Invention

One or more embodiments of the present invention provides a method for cultivating a plant, and the use of an agent for promoting coloring of grapes.

### BRIEF DESCRIPTION OF DRAWINGS

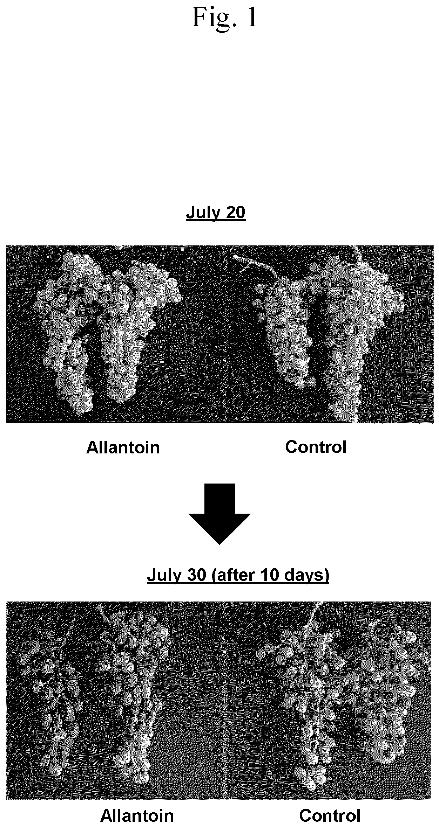

FIG. 1 shows representative photographs of grapes obtained from the allantoin treatment group (allantoin) and the control group (control) 10 days after the application of allantoin, as demonstrated in the Experiment.

### DESCRIPTION OF EMBODIMENTS

One or more embodiments of the present invention are described below.

### <1. Allantoin>

Allantoin is also referred to as "5-ureidohydantoin," and the free form thereof has a structure represented by the formula below.

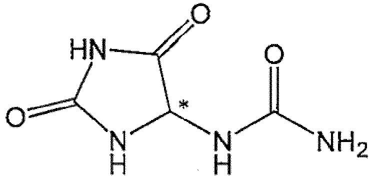

Allantoin has an asymmetric carbon (indicated by * in the formula), and it is either in the form of (R)-allantoin or (S)-allantoin. Allantoin used in the present disclosure may be (R)-allantoin or (S)-allantoin, or it may be in the form of a mixture of (R)-allantoin and (S)-allantoin. Allantoin may be synthetically produced, for example, from glyoxylic acid and urea. Allantoin may also be derived or obtained from plants such as comfrey and microorganisms.

Allantoin may be used in any form applicable to a plant. It may be the free form or any acceptable form such as solvate (e.g., a hydrate), salt, derivative, or complex thereof. It may be a mixture of two or more members of the free form, a hydrate, and any other form of allantoin.

### <2. Allantoin composition>

A composition used according to the present invention comprises allantoin, which may be applied to a plant ("allantoin composition" or "allantoin-containing composition").

In one or more embodiments, a concentration of allantoin in the composition may be about 10 to 99% by weight. For example, the concentration may be about 10% by weight or more, about 20% by weight or more, about 30% by weight or more, about 40% by weight or more, about 50% by weight or more, about 60% by weight or more, about 70% by weight or more, about 80% by weight or more, or about 90% by weight or more. The concentration may also be about 99% by weight or less, about 95% by weight or less, about 90% by weight or less, about 85% by weight or less, about 80% by weight or less, or about 75% by weight or less.

In one or more embodiments, the allantoin composition comprises one or more fertilizer components. The term "fertilizer component" as used herein refers to an element, a compound, or a composition utilized by plants, such as nitrogen, phosphorus, potassium, silicon, magnesium, calcium, manganese, boron, iron, and a compound or composition containing such an element. The fertilizer component may be organic or inorganic.

In one or more embodiments, a fertilizer component comprises a nitrogen source, a phosphorus source, a potassium source, a trace element, or a combination thereof. As a nitrogen source, ammonium sulfate, ammonium nitrate, ammonium chloride, urea, or lime nitrogen may be used. When a nitrogen source contains phosphorus and/or potassium, it may also serve as a phosphorus source and/or a potassium source.

As a phosphorus source, ammonium phosphate, potassium phosphate, superphosphate, triple superphosphate, fused phosphate fertilizer, multi-phosphate fertilizer, and phosphorous acid may be used. For example, ammonium phosphate includes monobasic ammonium phosphate (ammonium dihydrogen phosphate), ammonium secondary phosphate (diammonium hydrogen phosphate), and ammonium tertiary phosphate (triammonium phosphate). For example, potassium phosphate includes potassium primary phosphate (potassium dihydrogen phosphate) and potassium secondary phosphate (dipotassium hydrogen phosphate). When a phosphorus source contains nitrogen and/or potassium, it may also serve as a nitrogen source and/or a potassium source.

As a potassium source, potassium sulfate, potassium chloride, and potassium bicarbonate may be used. When a potassium source contains phosphorus and/or nitrogen, it may also serve as a phosphorus source and/or a nitrogen source.

As a trace element, boron, copper, iron, manganese, molybdenum, and zinc may be included. Examples of compounds providing such trace elements include boric acid, borax, copper sulfate, chelated copper, chelated iron, iron oxide, manganese sulfate, sodium molybdate, ammonium molybdate, zinc sulfate, and chelated zinc.

A fertilizer component may include the following: a fertilizer containing calcium, such as burnt lime, hydrated lime, magnesium lime, and calcium carbonate; a fertilizer containing silicon, such as calcium silicate; a slag silicate fertilizer; a fertilizer containing magnesium, such as magnesium sulfate, magnesium chloride, and humic acid magnesium; a fertilizer containing manganese, such as manganese sulfate, magnesium/manganese sulfate, and slag manganese; a fertilizer containing boron, such as boric acid and borate; a composite fertilizer containing trace elements; a fertilizer containing iron, such as iron/steel slag; or a fertilizer containing zinc, such as zinc sulfate.

In one or more embodiments, a concentration of a single fertilizer component in the allantoin composition may be about 1% by weight or more, about 2% by weight or more, about 5% by weight or more, about 10% by weight or more, about 15% by weight or more, about 20% by weight or more, about 25% by weight or more, about 30% by weight or more, or about 40% by weight or more. The concentration of a single fertilizer component may also be about 50% by weight or less, about 40% by weight or less, about 30% by weight or less, about 20% by weight or less, about 15% by weight or less, about 10% by weight or less, or about 5% by weight or less. For example, the concentration may be about 1 to 40% by weight, about 5 to 35% by weight, about 10 to 30% by weight, or about 15 to 25% by weight.

In one or more embodiments, a nitrogen content in the allantoin composition may be at least about 0.5% by weight. The term "nitrogen content" as used herein refers to a total content of nitrogen calculated as elemental nitrogen, which includes nitrogen derived from allantoin. The nitrogen content may be about 1% by weight or more, about 3% by weight or more, about 5% by weight or more, about 10% by weight or more, about 15% by weight or more, about 20% by weight or more, about 25% by weight or more, about 30% by weight or more, or about 35% by weight or more. The nitrogen content may also be about 50% by weight or less, about 40% by weight or less, about 30% by weight or less, or about 20% by weight or less. For example, the nitrogen content may be about 1 to 40% by weight, about 5 to 35% by weight, about 10 to 30% by weight, or about 15 to 25% by weight.

In one or more embodiments, a phosphorus content in the allantoin composition may be at least about 0.5% by weight. The term "phosphorus content" as used herein refers to a total content of phosphorus or water-soluble phosphorus calculated as P₂O₅. The phosphorus content may be about 1% by weight or more, about 2% by weight or more, about 3% by weight or more, about 5% by weight or more, about 8% by weight or more, about 11% by weight or more, about 15% by weight or more, about 20% by weight or more, or about 30% by weight or more. The phosphorus content may also be about 40% by weight or less, about 30% by weight or less, about 20% by weight or less, or about 10% by weight or less. For example, the phosphorus content may be about 1 to 30% by weight, about 3 to 25% by weight, about 5 to 20% by weight, or about 8 to 15% by weight.

In one or more embodiments, a potassium content in the allantoin composition may be at least about 0.5% by weight. The term "potassium content" as used herein refers to a total content of potassium or water-soluble potassium calculated as K₂O. The potassium content may be about 1% by weight or more, about 2% by weight or more, about 3% by weight or more, about 5% by weight or more, about 8% by weight or more, about 11% by weight or more, about 15% by weight or more, about 20% by weight or more, or about 30% by weight or more. The potassium content may also be about 40% by weight or less, about 30% by weight or less, about 20% by weight or less, or about 10% by weight or less. For example, the potassium content may be about 1 to 30% by weight, about 3 to 25% by weight, about 5 to 20% by weight, or about 8 to 15% by weight.

In one or more embodiments, the allantoin composition may comprise an additive such as a surfactant and a binder. A concentration of the additive in the allantoin composition may be at least about 0.001% by weight. The additive concentration may be about 0.005% by weight or more, about 0.01% by weight or more, about 0.05% by weight or more, about 0.1% by weight or more, about 0.5% by weight or more, about 1% by weight or more, about 3% by weight or more, about 5% by weight or more, or about 10% by weight or more. The additive concentration may also be about 30% by weight or less, about 20% by weight or less, about 15% by weight or less, or about 10% by weight or less. For example, the additive concentration may be about 0.01 to 20% by weight, about 0.05 to 15% by weight, about 0.1 to 10% by weight, or about 0.5 to 5% by weight.

Examples of such additives include polymeric compounds, non-polymeric compounds, salts thereof, and combinations of one or more additives. The polymeric compounds include carboxymethyl cellulose, methyl cellulose, ethyl cellulose, polyvinyl pyrrolidone, pullulan, acrylic acid-based polymer, polyvinyl alcohol, gelatin, agar, gum arabic, gum arabic powder, xanthan gum, trant gum, guar gum, gellan gum, locust bean gum, partially pregelatinized starch, macrogol, starch, soluble starch, dextrin, tragacanth gum, β-glucan, pectin, casein, soybean protein, hydroxyethyl cellulose, acetylcellulose, lignin sulfonic acid, carboxymethyl starch, hydroxyethyl starch, polyvinyl methyl ether, hydroxypropyl cellulose, hydroxypropyl methyl cellulose, polyethylene glycol, polyethylene oxide, polyvinylpyrrolidone, shellac, rosin, tall oil, ester gum, polyvinyl acetate, polylactic acid, polyvinyl chloride, polyester, polyurea, polyamide, cumarone resin, biodegradable polymers, paraffin wax, microcrystalline wax, petrolatum, montan wax, carnauba wax, cotton wax, beeswax, wool wax, non-ionic polymeric surfactant, anionic polymeric surfactant, cationic polymeric surfactant, amphoteric polymeric surfactant, and alginic acid. The non-polymeric compounds include sodium silicate, glycerin, vegetable and animal oils, fat and oil, liquid paraffin, fuel oil, glucose, sucrose, mannitol, sorbitol, non-polymeric non-ionic surfactant, non-polymeric anionic surfactant, non-polymeric cationic surfactant, and non-polymeric amphoteric surfactant.

In one or more embodiments, the allantoin composition may be a solid form. The solid formulation may be in the form of granules, powder, tablets, or flowable formulations. The solid formulation may have a water content of about 5% by weight or less, about 3% by weight or less, about 1% by weight or less, about 0.5% by weight or less, about 0.1% by weight or less, about 0.05% by weight or less, or about 0.01% by weight or less.

In one or more embodiments, a granular or powder composition comprising allantoin may have an average diameter of about 1 µm or more, about 10 µm or more, about 50 µm or more, or about 100 µm or more. The average diameter may also be about 1,000 µm or less, about 500 µm or less, about 200 µm or less, or about 100 µm or less.

In one or more embodiments, the allantoin composition may be a liquid form. The liquid formulation may comprise allantoin at a concentration of about 10 to 5,000 ppm, about 100 to 2,000 ppm, or about 300 to 1,500 ppm. The concentration may be about 10 ppm or more, about 50 ppm or more, about 100 ppm or more, about 300 ppm or more, about 500 ppm or more, or about 1,000 ppm or more, and may also be about 5,000 ppm or less, about 4,000 ppm or less, about 3,000 ppm or less, about 2,000 ppm or less, about 1,500 ppm or less, or about 1,000 ppm or less.

In one or more embodiments, the liquid formulation may have the pH of about 7.0 or less. For example, the pH of the liquid formulation may be about 6.5 or less, about 5.0 or less, about 4.5 or less, about 4.0 or less, about 3.5 or less, or about 3.0 or less. The pH of the liquid formulation may also be about 2.0 or more, about 2.5 or more, about 3.0 or more, about 3.5 or more, about 4.0 or more, or about 4.5 or more. The pH of the liquid formulation may be, for example, about 3.0 to 7.0, about 3.5 to 6.5, about 4.0 to 6.0, or about 4.5 to 5.5.

In one or more embodiments, the liquid formulation may be prepared by dissolving the solid formulation into water or an aqueous solution. For example, a concentration of the solid composition in the liquid formulation may be about 5 % by weight or less, about 3 % by weight or less, about 1 % by weight or less, about 0.5 % by weight or less, about 0.1 % by weight or less, or about 0.05 % by weight or less. The concentration of the solid composition in the liquid formulation may also be about 0.001 % by weight or more, about 0.005 % by weight or more, about 0.01 % by weight or more, about 0.05 % by weight or more, about 0.1 % by weight or more, or about 0.5 % by weight or more.

The liquid formulation may comprise one or more components of the solid formulation according to one or more embodiments of the present invention.

In one or more embodiments, the allantoin composition may comprise one or more pesticides such as chemical pesticides and biological pesticides. Such pesticides include herbicides, germicides, fungicides, insecticides, and pest attractant substances.

### <3. Method of applying allantoin to plants>

In one or more embodiments, allantoin or the allantoin composition may be applied to a plant at various concentrations, wherein the plant is a grapevine. For example, the dose of allantoin (per cultivation area per month) may be about 0.05 g/m²/month or more, about 0.1 g/m²/month or more, about 0.2 g/m²/month or more, about 0.3 g/m²/month or more, about 0.4 g/m²/month or more, about 0.5 g/m²/month or more, about 0.6 g/m²/month or more, about 0.7 g/m²/month or more, about 0.8 g/m²/month or more, about 0.9 g/m²/month or more, about 1 g/m²/month or more, about 1.5 g/m²/month or more, about 3 g/m²/month or more, about 5 g/m²/month or more, or about 10 g/m²/month or more. The dose of allantoin (per cultivation area per month) may also be about 20 g/m²/month or less, about 13 g/m²/month or less, about 10 g/m²/month or less, about 8 g/m²/month or less, about 6 g/m²/month or less, about 5 g/m²/month or less, about 4 g/m²/month or less, about 3 g/m²/month or less, about 2 g/m²/month or less, about 1.5 g/m²/month or less, about 1 g/m²/month or less, about 0.8 g/m²/month or less, or about 0.6 g/m²/month or less. The above values (unit: g/m²/month) may be expressed as a single dose (unit: g/m²) per application.

For example, the dose of allantoin may be about 0.05 to 20 g/m²/month, about 0.1 to 13 g/m²/month, about 1 to 10 g/m²/month, or about 3 to 8 g/m²/month. The dose may also be about 0.05 to 5 g/m²/month, about 0.1 to 3 g/m²/month, or about 0.2 to 1.5 g/m²/month. The above values (unit: g/m²/month) may be expressed as a single dose (unit: g/m²) per application.

In one or more embodiments, a concentration of allantoin in a cultivation medium may be about 10 µM or more, about 50 µM or more, about 100 µM or more, about 250 µM or more, about 500 µM or more, about 750 µM or more, about 1 mM or more, about 1.25 mM or more, about 1.5 mM or more, about 3 mM or more, about 6 mM or more, about 10 mM or more, about 20 mM or more, about 30 mM, or about 50 mM or more. The concentration of allantoin may also be about 100 mM or less, about 50 mM or less, about 30 mM or less, about 20 mM or less, about 10 mM or less, about 8 mM or less, about 6 mM or less, about 4 mM or less, about 2 mM or less, about 1 mM or less, about 800 µM or less, or about 600 µM or less.

For example, the concentration of allantoin may be about 10 µM to 100 mM, about 100 µM to 50 mM, about 500 µM to 30 mM, or about 1 mM to 20mM.

In one or more embodiments, the dose of allantoin may be about 0.005 g/plant/month or more, about 0.01 g/plant/month or more, about 0.02 g/plant/month or more, about 0.03 g/plant/month or more, about 0.04 g/plant/month or more, about 0.05 g/plant/month or more, about 0.06 g/plant/month or more, about 0.07 g/plant/month or more, about 0.08 g/plant/month or more, about 0.09 g/plant/month or more, about 0.1 g/plant/month or more, about 0.2 g/plant/month or more, about 0.3 g/plant/month or more, about 0.4 g/plant/month or more, about 0.5 g/plant/month or more, about 0.6 g/plant/month or more, about 0.7 g/plant/month or more, about 0.8 g/plant/month or more, about 0.9 g/plant/month or more, about 1 g/plant/month or more, about 1.5 g/plant/month or more, about 2 g/plant/month or more, about 2.5 g/plant/month or more, about 3 g/plant/month or more, about 4 g/plant/month or more, or about 5 g/plant/month or more. The dose of allantoin may also be about 15 g/plant/month or less, about 10 g/plant/month or less, about 8 g/plant/month or less, about 6 g/plant/month or less, about 5 g/plant/month or less, about 4.5 g/plant/month or less, about 4 g/plant/month or less, about 3.5 g/plant/month or less, about 3 g/plant/month or less, about 2.5 g/plant/month or less, about 2 g/plant/month or less, about 1.5 g/plant/month or less, about 1 g/plant/month or less, about 0.5 g/plant/month or less, about 0.3 g/plant/month or less, or about 0.1 g/plant/month or less. The above values (unit: g/plant/month) may be expressed as a single dose (unit: g/plant) per application.

For example, the dose of allantoin may be about 0.03 to 10 g/plant/month, about 0.05 to 5 g/plant/month, or about 0.1 to 2.5 g/plant/month. The above values (unit: g/plant/month) may be expressed as a single dose (unit: g/plant) per application.

In one or more embodiments, plants may be grown in cultivation media before or after applying allantoin or the allantoin composition to the plants. Plants may also be hydroponically grown. Such cultivation media include, but are not limited to soil, water, and a cultivation material.

Plants may be grown at a planting density of about 500 plants/hectare or more, 800 plants/hectare or more, about 1,000 plants/hectare or more, 1,200 plants/hectare or more, about 1,500 plants/hectare or more, about 2,000 plants/hectare or more, about 2,500 plants/hectare or more, about 3,000 plants/hectare or more, about 3,500 plants/hectare or more, about 4,000 plants/hectare or more, about 5,000 plants/hectare or more, about 6,000 plants/hectare or more, about 8,000 plants/hectare or more, about 10,000 plants/hectare or more, about 15,000 plants/hectare or more, about 20,000 plants/hectare or more, about 25,000 plants/hectare or more, or about 30,000 plants/hectare or more. Plants may also be grown at a planting density of about 50,000 plants/hectare or less, about 40,000 plants/hectare or less, about 30,000 plants/hectare or less, about 20,000 plants/hectare or less, about 15,000 plants/hectare or less, about 10,000 plants/hectare or less, about 8,000 plants/hectare or less, about 6,000 plants/hectare or less, about 5,000 plants/hectare or less, about 4,000 plants/hectare or less, or about 3,000 plants/hectare or less.

Grapevines may be grown at a density of about 500 to 15,000 plants/hectare, about 1,500 to 10,000 plants/hectare, or about 2,000 to 8,000 plants/hectare.

In one or more embodiments, allantoin or the allantoin composition may be applied to the whole plant or a part of the plant. For example, allantoin or the allantoin composition may be applied directly to a plant body, such as roots, stems, leaves, branches, flowers, fruiting bodies, fruits, seeds, tubers, rhizomes, and any other parts of a plant. Allantoin or the allantoin composition may also be applied to a plant through cultivation media or a surrounding environment such as a crop field.

In one or more embodiments, allantoin or the allantoin composition may be provided through various methods such as foliar application, fertigation, and soil application. Such application methods include, but are not limited to spraying, misting, dusting, dressing, coating, dust coating, diffusion, dipping, irrigation, injection, sprinkling, foaming, fumigation, smoking, fuming, spreading, and painting. For example, allantoin or the allantoin composition, such as the liquid formulation, may be sprayed over cultivation media, or sprayed onto plants. Types of irrigation include, but are not limited to surface irrigation, micro-irrigation, sprinkler irrigation such as center pivot irrigation, and subirrigation.

In one or more embodiments, allantoin or the allantoin composition may be applied directly to above-ground portions of a plant. As used herein, the term "above-ground portion" indicates a part of a plant body that is above a cultivation medium, and it generally refers to a part that is not buried in the cultivation medium or a part that is exposed to air. For example, the above-ground portions of plants include leaves, stems, trunk, fruits, flowers, and blossoms. Allantoin or the allantoin composition may be partially or entirely applied to each part of plants. For example, it may be applied only to a ventral (front) or dorsal (back) side of a leaf, or to both sides of the leaf. It may also be partially or entirely applied to a fruit surface or skin (for example, only to outer surfaces of bunches). In one or more embodiments, allantoin or the allantoin composition may be applied to leaves or fruits.

In one or more embodiments, allantoin or the allantoin composition may be applied only to one or more above-ground portions of a plant.

Allantoin or the allantoin composition may be applied using a machine, a device, or equipment such as drones, helicopters, sprinklers, and center pivots. In one or more embodiments, spraying devices such as a boom sprayer may be used. The liquid formulation of allantoin may be sprayed at about 100 liters per hectare or more, about 200 liters per hectare or more, about 300 liters per hectare or more, about 400 liters per hectare or more, or about 500 liters per hectare or more. The liquid formulation may be sprayed at about 3,000 liters per hectare or less, about 2,000 liters per hectare or less, about 1,000 liters per hectare or less, about 500 liters per hectare or less, or about 300 liters per hectare or less. For example, in one or more embodiments, the volume may be about 100 to 3,000 liters per hectare, about 200 to 2,000 liters per hectare, or about 300 to 1,000 liters per hectare. In one or more embodiments, an electrostatic sprayer or an electrostatic spray nozzle may be used.

In one or more embodiments, allantoin or the allantoin composition may also be mixed in cultivation media. For example, the liquid formulation may be applied to plant roots via surface irrigation or the solid formulation may be added to soil.

In one or more embodiments, a spreading agent may be used together with allantoin or the allantoin composition. Examples of the spreading agent include sodium dialkyl sulfosuccinate, polyoxyethylene alkyl ether, polyoxyethylene alkylphenyl ether, and polyoxyethylene fatty acid ester. The spreading agent may also be paraffin, terpene, polyamide resin, polyacrylate, polyoxyethylene, wax, polyvinyl alkyl ether, alkylphenol formalin condensate, or synthetic resin emulsion.

In one or more embodiments, allantoin or the allantoin composition may be applied together with one or more pesticides such as chemical pesticides and biological pesticides. Such pesticides include herbicides, germicides, fungicides, insecticides, and pest attractant substances. The pesticides and allantoin may be mixed in a composition such as the liquid formulation according to one or more embodiments of the present invention. The pesticides may also be applied to plants either simultaneously or at any time before or after applying allantoin or the allantoin composition to the plants.

In one or more embodiments, allantoin or the allantoin composition may be applied with various plant growth regulators. The plant growth regulators may promote or suppress, for example, growth, fruiting, flowering, rooting, coloring, and seed formation of plants. The plant growth regulators include, for example, substances such as plant hormones including gibberellin, auxin, ethylene, cytokinin and abscisic acid, and antagonists thereof. Allantoin or the allantoin composition may also be used without the plant growth regulator.

In one or more embodiments, one or more plant growth regulators may be applied at a dose of 5 µg/m²/month or more, 0.01 mg/m²/month or more, 0.05 mg/m²/month or more, 0.1 mg/m²/month or more, 1 mg/m²/month or more, 5 mg/m²/month or more, 0.01 g/m²/month or more, 0.05 g/m²/month or more, or 0.1 g/m²/month or more. One or more plant growth regulators may be applied at a dose of 15 g/m²/month or less, 10 g/m²/month or less, 5 g/m²/month or less, 1 g/m²/month or less, 0.5 g/m²/month or less, 0.1 g/m²/month or less, 0.05 g/m²/month or less, 0.01 g/m²/month or less, 5 mg/m²/month or less, or 1 mg/m²/month or less. The above values (unit:µg/m²/month) may be expressed as a single dose (unit:µg/m²) per application. The above values (unit: mg/m²/month) may be expressed as a single dose (unit: mg/m²) per application. The above values (unit: g/m²/month) may be expressed as a single dose (unit: g/m²) per application.

In one or more embodiments, allantoin or the allantoin composition may promote coloring of a plant body such as fruit coloring and flower coloring. Thus, allantoin or the allantoin composition may be applied to plants without an agent that promotes the coloring or with the agent at a low concentration.

For example, allantoin or the allantoin composition may be applied to grapevines without abscisic acid or an amino acid, or with abscisic acid or an amino acid at a low concentration. In one or more embodiments, abscisic acid is not applied at a dose of 0.05 mg/m²/month or more, 0.03 mg/m²/month or more, 0.01 mg/m²/month or more, 0.005 mg/m²/month or more, 0.004 mg/m²/month or more, 0.003 mg/m²/month or more, 0.002 mg/m²/month or more, or 0.001 mg/m²/month or more. In one or more embodiments, an amino acid (such as leucine, isoleucine, phenylalanine, etc.) is not applied at a dose of 0.05 g/m²/month or more, 0.03 g/m²/month or more, 0.01 g/m²/month or more, 0.005 g/m²/month or more, 0.004 g/m²/month or more, 0.003 g/m²/month or more, 0.002 g/m²/month or more, or 0.001 g/m²/month or more. The above values (unit: mg/m²/month) may be expressed as a single dose (unit: mg/m²) per application. The above values (unit: g/m²/month) may be expressed as a single dose (unit: g/m²) per application.

In one or more embodiments, allantoin or the allantoin composition may increase an anthocyanin content in plants. For example, it may increase an anthocyanin content in grapes. As used herein, the term "anthocyanin" includes a glycoside in which an anthocyanidin such as cyanidin, peonidin, delphinidin, petunidin, and malvidin is linked, as an aglycone, to a sugar or a sugar chain. Plants with a high anthocyanin content include, but are not limited to, grape, apple, cherry, strawberry, blueberry, blackberry, bilberry, cranberry, prune, eggplant, perilla, and black bean.

The plants in the method and uses according to the present invention are grapevines. To highlight the background of the claimed invention, other plants are herein further mentioned, whereby the present invention is defined by the appended claims. Described plants may be climacteric plants or fruits, or non-climacteric plants or fruits. These plants are classified by their respiratory behaviors in the ripening process. In the present disclosure, the term "climacteric" generally refers to the ripening stage of a plant or fruit associated with an increased ethylene production and an increased respiratory rate (i.e., "climacteric rise"). As used herein, the term "climacteric plant" generally refers to a plant showing a climacteric rise in the ripening process. For example, climacteric plants include, but are not limited to, apple, banana, mango, papaya, guava, pome fruits, plum, peach, nectarines, apricot, passion fruit, kiwi, tomato, and avocado.

As used herein, the term "non-climacteric plant" generally refers to a plant which does not show a climacteric rise in the ripening process. Non-climacteric plants may refer to all of the target plants except for climacteric plants, and target plants may also be plants excluding the specific climacteric plants disclosed herein. For example, non-climacteric plants include, but are not limited to, grape, cherry, strawberry, blueberry, blackberry, cranberry, raspberry, bilberry, citrus fruits (such as orange), pineapple, olive, cacao, carrot, onion, celery, spinach, cucumbers, zucchini, crucifers, and beans.

In one or more embodiments, plants after applying allantoin or the allantoin composition may have an increased anthocyanin content in a plant body, as compared to an anthocyanin content in a plant body of plants to which allantoin or the allantoin composition has not been applied.

The anthocyanin content may be increased by about 5% or more, about 10% or more, about 20% or more, about 40% or more, about 60% or more, about 100% or more, about 150% or more, about 200% or more, or about 250% or more, at least 10 days after the application (for example, 10 days, 20 days, or 30 days after the application), as compared to an anthocyanin content of plants to which allantoin or the allantoin composition has not been applied. The anthocyanin content may be increased by about 400% or less, about 350% or less, about 300% or less, about 250% or less, about 200% or less, about 150% or less, about 100% or less, about 50% or less, or about 30% or less, at least 10 days after the application (for example, 10 days, 20 days, or 30 days after the application), as compared to an anthocyanin content of plants to which allantoin or the allantoin composition has not been applied. For example, the anthocyanin content may be increased by about 10 to 350%, about 20 to 300%, about 40 to 250%, or about 60 to 200% 10 days after the application.

In one or more embodiments, allantoin or the allantoin composition may be applied several times by dividing a total amount to be applied. For example, allantoin or the allantoin composition may be applied 2 times or more per month, 3 times or more per month, 4 times or more per month, or 5 times or more per month. It may be applied less than 10 times per month, less than 8 times per month, less than 6 times per month, or less than 4 times per month. Time intervals between each application may be 0.5 days or more, 1 day or more, 2 days or more, 3 days or more, 5 days or more, or 10 days or more, and may also be 15 days or less, 10 days or less, 5 days or less, 3 days or less, or 2 day or less. For example, time intervals may be 0.5 to 10 days, 0.5 to 9 days, 0.5 to 8 days, 0.5 to 7 days, 0.5 to 6 days, 0.5 to 5 days, 0.5 to 4 days, 0.5 to 3 days, 0.5 to 2 days, or 0.5 to 1.5 days.

Allantoin or the allantoin composition may be applied to a plant at any growth phase. In one or more embodiments, allantoin or the allantoin composition may be applied to a plant at a germination stage, a vegetative stage, a reproductive stage, a flowering stage, or a ripening stage. In one or more embodiments, allantoin or the allantoin composition may be applied to a plant grown for, for example, 1 day or more, 3 days or more, 5 days or more, 10 days or more, 15 days or more, 20 days or more, 25 days or more, 30 days or more, 40 days or more, 50 days or more, 60 days or more, 70 days or more, 80 days or more, 90 days or more, 100 days or more, 110 days or more, 120 days or more, 150 days or more, 180 days or more, 240 days or more, 1 year or more, 1.5 years or more, 2 years or more, or 2.5 years or more, after seeding the plant.

In one or more embodiments, allantoin or the allantoin composition may be applied to plants after bearing or producing fruits. Such a period includes a period before or after the onset of fruit coloring. One or more embodiments include applying allantoin or the allantoin composition to grapevines at the stage of veraison. The annual growth cycle of plants such as grapevines generally includes stages such as bud break, flowering, fruit set, veraison, and harvest. As used herein, the veraison stage generally refers to a stage characterized by changes in appearance and hardness of grapes, which is often a period from the onset of ripening to harvesting.

In one or more embodiments, plants may be cultivated under various conditions and in various climates before or after applying allantoin or the allantoin composition. Plants may be grown or cultivated in cultivation media for 1 day or more, 3 days or more, 5 days or more, 10 days or more, 15 days or more, 20 days or more, 25 days or more, 30 days or more, 40 days or more, 50 days or more, 60 days or more, 70 days or more, 80 days or more, 90 days or more, 100 days or more, 110 days or more, 120 days or more, 150 days or more, 180 days or more, 240 days or more, 1 year or more, 1.5 years or more, 2 years or more, or 2.5 years or more. Plants may also be grown or cultivated in cultivation media for 3 years or less, 2.5 years or less, 1.5 years or less, 1 year or less, 240 days or less, 180 days or less, 150 days or less, 120 days or less, 110 days or less, 100 days or less, 90 days or less, 80 days or less, 70 days or less, 60 days or less, 50 days or less, 40 days or less, 30 days or less, 25 days or less, 20 days or less, 15 days or less, 10 days or less, 5 days or less, or 3 days or less.

Plants are grown or cultivated at a temperature of about 30 °C or higher, about 32.5 °C or higher, about 35 °C or higher, about 37.5 °C or higher, about 40 °C or higher, about 42.5 °C or higher, or about 45 °C or higher. Plants may also be grown or cultivated at a temperature of about 50 °C or less, about 45 °C or less, about 40 °C or less, or about 35 °C or less. The temperature may be a temperature of a cultivation medium such as a soil temperature.

Plants may be exposed to such temperatures for various time ranges. In one or more embodiments, an exposure time per day exposed to such temperatures is about 60 minutes or more, about 90 minutes or more, about 120 minutes or more, about 180 minutes or more, about 240 minutes or more, about 300 minutes or more, or about 360 minutes or more. An exposure time exposed to such temperatures may also be about 600 minutes or less, about 480 minutes or less, about 360 minutes or less, about 240 minutes or less, about 180 minutes or less, or about 120 minutes or less.

The number of exposure days per year exposed to such temperatures may be 1 or more, 5 or more, 10 or more, 20 or more, 30 or more, 60 or more, 90 or more, 120 or more, 150 or more, or 180 or more. The number of exposure days per year exposed to such temperatures may also be 210 or less, 180 or less, 150 or less, 120 or less, 90 or less, 60 or less, 30 or less, 20 or less, 10 or less, or 5 or less.

In one or more embodiment, exposing a plant such as grapevine to such temperatures may be performed 0.5 days or more, 1 day or more, 2 days or more, 3 days or more, 4 days or more, or 5 days or more after applying allantoin or an allantoin composition to the plant. Exposing a plant such as grapevine to such temperatures may also be performed 10 days or less, 9 days or less, 8 days or less, 7 days or less, or 6 days or less after applying allantoin or an allantoin composition to the plant.

### <4. Plants>

In one or more embodiments, allantoin or an allantoin-containing composition may be applied to target plants. In the present invention, allantoin is applied to a grapevine. Other plants are described therein to illustrate the background of the present invention, which is defined by the appended claims. Examples of plants include various plants, such as dicotyledons and monocotyledons.

In the claimed invention, the target plant is a grapevine such as *Vitis* spp., including various grapes such as table grapes, juice grapes and wine grapes. For example, such grapes include, but are not limited to, Cabernet Sauvignon, Merlot, Tempranillo, Pinot Noir, Schiller, Muscat Bailey A, Kyoho, Pione, Delaware, Clone 21, Crimson Seedless, Flame Seedless, and Red Globe.

In one or more embodiments, one or more plants mentioned above may be excluded from the target plants.

Target plants are not limited to wild-type plants, and mutants, transformants, genetically-modified plants or crops, and any other type of plants may be the target plants.

### EXAMPLES

Hereafter, one or more embodiments of the present invention are described with reference to examples described below. The technical scope of the present invention is not limited to these examples.

### Experiment Promotion of Merlot grape coloring

In this experiment, Merlot cultivated in the field (espalier, 30-year-old tree, planting density = 4000 vines/hectare) was used. Four Merlot vines at a veraison stage (Kofu city, Yamanashi prefecture, Japan, July 20, 2017, 30.0 °C) were divided into two groups: control group of two grapevines and treatment group of two grapevines, and each group was tested as follows. For the control group, a mixed solution of 500 mL of water and 500 µL of a commercial spreading agent ("Squash" manufactured by Maruwa Biochemical Co., Ltd.) was used for each grapevine. The mixture was sprayed mainly onto grape bunches and entirely onto above-ground portions of each vine. For the treatment group, a mixed solution of 500 mL of 6.3 mM allantoin aqueous solution (corresponding to 0.2 g/m² of allantoin) and 500 µL of the commercial spreading agent was used for each grapevine. The mixture containing allantoin was sprayed mainly onto grape bunches and entirely onto above-ground portions of each vine.

Grapes were then harvested from each group 0, 10, 20 and 30 days after the spraying. Twenty grapes from one grape bunch were obtained from each grapevine at each day, and they were used for measuring anthocyanin contents. Anthocyanin was extracted from 1 g of ground peel with 7 mL of extract solution (water : acetone = 1 : 2), and its anthocyanin content (mg/g skin FW) was measured. The average values of anthocyanin contents of two grapevines were calculated for each group.

As a result, after 10 days, the anthocyanin content of the control group was 0.8 (mg/g skin FW) and the anthocyanin content of the treatment group was 2.1 (mg/g skin FW). After 20 days, the anthocyanin content of the control group was 2.1 (mg/g skin FW) and the anthocyanin content of the treatment group was 3.4 (mg/g skin FW). After 30 days, the anthocyanin content of the control group was 3.2 (mg g skin FW) and the anthocyanin content of the treatment group was 3.8 (mg/g skin FW). Photographs of grape bunches from the treatment group (allantoin) and the control group (control) after 10 days are shown in FIG. 1.

It was thus shown that the content of anthocyanin in grape skins was increased and coloring was promoted by spraying allantoin onto above-ground portions of grapevines.

In the present disclosure, lower and upper limits may be used alone or may be combined to define a numerical range of values. A specific value described in the present disclosure, which overlaps with a certain numerical range, may be used as a lower limit or an upper limit of the range. Specific compounds, components, or examples listed in the present disclosure may be used alone or in combination with other compounds, components, or examples.

## Claims

1. A method for cultivating a plant, comprising:
applying allantoin to a grapevine;
growing the grapevine in a cultivation medium; and
comprising exposing the grapevine to a temperature of 30 °C or more for at least 60 minutes.

2. The method according to claim 1, wherein applying the allantoin is performed at a veraison stage of the grapevine.

3. The method according to claim 1 or 2, wherein the allantoin is applied to a part of the grapevine that is above the cultivation medium at a dose of about 0.05 to 5 g per grapevine.

4. The method according to any one of claims 1 to 3, wherein the allantoin is applied by spraying the allantoin on leaves or fruits of the grapevine at a dose of about 0.05 to 5 g per grapevine.

5. The method according to any one of claims 1 to 4, wherein the grapevine is grown at a density of about 1,500 to 10,000 plants per hectare, and wherein about 0.1 to 13 g/m² of the allantoin is applied.

6. The method according to any one of claims 1 to 5, wherein an amino acid is not applied to the grapevine at a dose of 0.005 g/m² or more.

7. The method according to any one of claims 1 to 6, wherein abscisic acid is not applied to the grapevine at a dose of 0.005 mg/m² or more.

8. The method according to any one of claims 1 to 7, further comprising exposing the grapevine to a temperature of about 45 °C or more for at least 90 minutes.

9. Use of allantoin as a coloring improving agent for fruits of a grapevine, wherein the coloring improving agent is applied to a grapevine cultivated in an environment in which the grapevine is exposed to a temperature of 30 °C or more for at least 60 minutes.

10. The use according to claim 9, wherein the coloring improving agent is applied to a grapevine to which an amino acid is not applied at a dose of 0.005 g/m² or more.

11. The use according to any one of claims 9 or 10, wherein the coloring improving agent is applied to a grapevine to which abscisic acid is not applied at a dose of 0.005 mg/m² or more.

## Patentansprüche

1. Verfahren zum Kultivieren einer Pflanze, umfassend:
das Aufbringen von Allantoin auf eine Weinrebe;
das Kultivieren der Weinreben in einem Kulturmedium; und
umfassend das Aussetzen der Weinrebe einer Temperatur von 30 °C oder mehr für mindestens 60 Minuten.

2. Verfahren gemäß Anspruch 1, worin das Aufbringen des Allantoins im Stadium der Véraison der Weinrebe erfolgt.

3. Verfahren gemäß Anspruch 1 oder 2, worin das Allantoin auf einen Teil der Weinrebe, der sich über dem Kulturmedium befindet, in einer Dosis von etwa 0,05 bis 5 g pro Weinrebe aufgebracht wird.

4. Verfahren gemäß einem der Ansprüche 1 bis 3, worin das Allantoin durch Sprühen des Allantoins auf Blätter oder Früchte der Weinrebe in einer Dosis von etwa 0,05 bis 5 g pro Weinrebe aufgebracht wird.

5. Verfahren gemäß einem der Ansprüche 1 bis 4, worin die Weinrebe bei einer Dichte von etwa 1.500 bis 10.000 Pflanzen pro Hektar kultiviert wird und worin etwa 0,1 bis 13 g/m² des Allantoins aufgetragen werden.

6. Verfahren gemäß einem der Ansprüche 1 bis 5, worin eine Aminosäure nicht in einer Dosis von 0,005 g/m² oder mehr auf die Weinrebe aufgebracht wird.

7. Verfahren gemäß einem der Ansprüche 1 bis 6, worin Abscisinsäure nicht in einer Dosis von 0,005 g/m² oder mehr auf die Weinrebe aufgebracht wird.

8. Verfahren gemäß einem der Ansprüche 1 bis 7, ferner umfassend das Aussetzen der Weinrebe einer Temperatur von etwa 45 °C oder mehr für mindestens 90 Minuten.

9. Verwendung von Allantoin als Farbverbesserungsmittel für Früchte einer Weinrebe, worin das Farbverbesserungsmittel auf eine Weinrebe aufgebracht wird, die in einer Umgebung kultiviert wird, in der die Weinrebe einer Temperatur von 30 °C oder mehr für mindestens 60 Minuten ausgesetzt ist.

10. Verwendung gemäß Anspruch 9, worin das Farbverbesserungsmittel auf eine Weinrebe aufgebracht wird, auf die eine Aminosäure nicht in einer Dosis von 0,005 g/m² oder mehr aufgebracht wird.

11. Verwendung gemäß Anspruch 9 oder 10, worin das Farbverbesserungsmittel auf eine Weinrebe aufgebracht wird, auf die Abscisinsäure nicht in einer Dosis von 0,005 g/m² oder mehr aufgebracht wird.

## Revendications

1. Procédé permettant de cultiver une plante, comprenant :
l'application d'une allantoïne à une vigne ;
la culture de la vigne dans un milieu de culture ; et
comprenant l'exposition de la vigne à une température de 30 °C ou plus pendant au moins 60 minutes.

2. Procédé selon la revendication 1, dans lequel l'application de l'allantoïne est effectuée au stade de véraison de la vigne.

3. Procédé selon la revendication 1 ou la revendication 2, dans lequel l'allantoïne est appliquée à une partie de la vigne qui est au-dessus du milieu de culture à une dose d'environ 0,05 à 5 g par vigne.

4. Procédé selon l'une quelconque des revendications 1 à 3, dans lequel l'allantoïne est appliquée par pulvérisation de l'allantoïne sur des feuilles ou des fruits de la vigne à une dose d'environ 0,05 à 5 g par vigne.

5. Procédé selon l'une quelconque des revendications 1 à 4, dans lequel la vigne est cultivée à une densité d'environ 1 500 à 10 000 plants par hectare, et dans lequel environ 0,1 à 13 g/m² de l'allantoïne sont appliqués.

6. Procédé selon l'une quelconque des revendications 1 à 5, dans lequel un acide aminé n'est pas appliqué à la vigne à une dose de 0,005 g/m² ou plus.

7. Procédé selon l'une quelconque des revendications 1 à 6, dans lequel de l'acide abscissique n'est pas appliqué à la vigne à une dose de 0,005 mg/m² ou plus.

8. Procédé selon l'une quelconque des revendications 1 à 7, comprenant en outre l'exposition de la vigne à une température d'environ 45 °C ou plus pendant au moins 90 minutes.

9. Utilisation d'une allantoïne en tant qu'agent d'amélioration de la coloration pour des fruits d'une vigne, dans laquelle l'agent d'amélioration de la coloration est appliqué à une vigne cultivée dans un environnement dans lequel la vigne est exposée à une température de 30 °C ou plus pendant au moins 60 minutes.

10. Utilisation selon la revendication 9, dans laquelle l'agent d'amélioration de la coloration est appliqué à une vigne à laquelle un acide aminé n'est pas appliqué à une dose de 0,005 g/m² ou plus.

11. Utilisation selon l'une quelconque des revendications 9 ou 10, dans laquelle l'agent d'amélioration de la coloration est appliqué à une vigne à laquelle de l'acide abscissique n'est pas appliqué à une dose de 0,005 mg/m² ou plus.
